# DEMANDE DE BREVET EUROPEEN

(11) **EP 0 926 084 A1**
(43) Date de publication de la demande: **30.06.1999**
(21) Numéro de dépôt: 98403265.6
(22) Date de dépôt: 22.12.1998
(51) Int. Cl.: B65G 47/82

(54) **Dispositif de transfert et convoyeur equipe d'un tel dispositif**

(30) Priorité: 22.12.1997 FR 9716590
(71) Demandeur: Gallet Systèmes Automatises, 69200 Venissieux (FR)
(72) Inventeur: Hugon, Jean, 69003 Lyon (FR); Semain, Jean-Pierre, 69004 Lyon (FR)
(74) Mandataire: Derambure, Christian

(57) **Abrégé**

Dispositif de transfert pour convoyeur linéaire (1) comprenant des moyens de déplacement d'objets (2) selon une direction différente de la direction de convoyage (XX') du convoyeur, un lever pendulaire (5) étant apte à exercer sélectivement sur les objets un effort (E) de poussée, le levier pendulaire étant commandé par une bielle (11) entraînée en rotation par un ensemble de motorisation (8), la liaison cinématique entre la bielle et le levier étant une liaison coulissante, afin d'évacuer sans pivotement les objets (2) hors du convoyeur .

## Description

L'invention concerne un dispositif de transfert pour convoyeur et un convoyeur équipé d'un tel dispositif.

Dans ces convoyeurs utilisés pour le transport d'objets tridimentionnels tels que colis, il est connu d'utiliser dans une section linéaire du convoyeur le plus souvent, des poussoirs travaillant dans une direction différente de la direction de convoyage pour extraire ces objets du convoyage vers une zone externe, par exemple en direction d'un autre convoyeur perpendiculaire.

En général, ces poussoirs sont disposés sur un côté du convoyeur à l'opposé de la zone vers laquelle doivent être envoyés les objets, ce qui induit un encombrement transversal souvent inacceptable.

Il est ainsi courant que les poussoirs saillent, parfois de manière importante, à l'extérieur du convoyeur, sur ce côté transversal.

En outre, les systèmes d'actionnement de ces poussoirs sont en général prévus pour générer une inversion de la direction du mouvement du poussoir à chaque fin de course, c est-à-dire au terme de la poussée de l'objet et à la fin du mouvement de retrait du poussoir par rapport au convoyeur.

Dans les deux cas, cette inversion de mouvement nécessite des équipements (butées et détecteurs de présence de l'objet) supplémentaires pour l'arrêt du mouvement en sens 〈〈 aller 〉〉, le respect d'un point fixe et l'initialisation du mouvement en sens 〈〈 retour 〉〉.

Alors, le point fixe est atteint avec une précision faible, de sorte que la position d'arrêt des objets n'est pas efficacement contrôlée.

Dans ce contexte, citons le document DE-U-86 07 794 qui décrit un pousseur prévu pour diriger des colis portés par un premier convoyeur vers un second convoyeur.

Le pousseur est articulé autour d'un axe fixe qui est situé sur le côté du premier convoyeur, en étant perpendiculaire à la direction de convoyage.

Ainsi, chaque objet déplacé, du premier convoyeur vers le second convoyeur, subit un mouvement de rotation du fait de sa coopération avec un galet d'extrémité du pousseur.

Le document FR-A-1 587 777 décrit un distributeur comprenant un bol vibrant raccordé à une piste pour la fourniture de pièces, alors que trois poussoirs sont déplacés perpendiculairement à la piste par une traverse, sans être articulés autour d'un axe.

Le document DD-A-30 935 décrit un dispositif de séparation de pièces pressées sur une presse circulaire. Des plaques formant poussoir sont utilisées pour déplacer les pièces.

Le document GB-A-733 204 décrit un système de convoyage, dans lequel un chariot mobile perpendiculairement à la direction de convoyage d'une bande sans fin, déplace des objets perpendiculairement à cette direction de convoyage, tandis qu'un interrupteur est prévu pour être activé par les objets atteignant une butée.

Le document FR-A-2 056 305 décrit un dispositif de poussée horizontale pour la mise en mouvement de pièces, qui comprend un moteur hydraulique entraînant une roue dentée grâce à un filetage. Il n'est pas prévu de transférer un colis et le mouvement angulaire de l'arbre est limité à une amplitude inférieure à un tour.

Le document US-3 246 733 décrit un système de convoyage avec plusieurs bandes de sorties ou chutes, en regard desquelles sont disposés des pousseurs individuels.

L'invention vise à remédier aux inconvénients évoqués plus haut en proposant notamment un dispositif de transfert dont l'élément pousseur est entraîné grâce à un mécanisme précis, simple et peu encombrant, qui ne nécessite pas d'inversion de sens de rotation, et en général sans variation de vitesse de rotation.

Ainsi, l'invention autorise qu'un transfert soit effectué sans pivotement sur lui-même de l'objet, et sans changement de son sens de circulation.

On cherche ainsi à obtenir que les objets soient transférés hors du convoyeur, en position fixe et répétable avec précision, quelle que soit la masse de cet objet.

A cet effet, un premier objet de l'invention concerne un dispositif de transfert destiné à un convoyeur linéaire tel que défini dans les revendications.

Grâce à l'invention, le mouvement de rotation du moteur est transformé en mouvement de va-et-vient angulaire d'un levier de poussée. Le lever a un mouvement du type sinusoïdal, uniformément varié avec accélération et décélération mécanique à chaque fin de course aller et retour.

Ceci autorise une vitesse de transfert des objets sensiblement plus élevée qu'avec les techniques connues, pour une vitesse de convoyage donnée.

Etant entendu que selon les cas, le transfert s'effectue avec le convoyeur en fonctionnement, avec un ralentissement ou encore à l'arrêt.

Selon une caractéristique, l'ensemble de motorisation tourne dans un seul sens, ce que permet de se dispenser d'une inversion du sens de rotation de la motorisation du levier.

Selon une réalisation, le levier est articulé autour d'un axe sensiblement parallèle à la direction de convoyage, cet axe étant situé au-dessus ou au-dessous du convoyeur, alors que l'extrémité libre du levier a une trajectoire selon un arc de cercle au-dessus ou au-dessous du convoyeur.

On peut ainsi prévoir que le dispositif comprend plusieurs leviers, actionnés par un ensemble de motorisation commun, les bielles de commande des leviers étant montées sur un arbre commun entraîné par cet ensemble.

Selon une autre réalisation, le levier est articulé autour d'un axe sensiblement perpendiculaire à la direction de convoyage, cet axe étant situé au-dessus ou au-dessous du convoyeur, alors que l'extrémité libre du levier a une trajectoire selon un arc de cercle, dans un plan sensiblement horizontal, au-dessus ou au-dessous du convoyeur.

Par exemple, l'axe est vertical, c'est-à-dire non seulement perpendiculaire à la direction de convoyage, mais aussi sécant à la direction de transfert.

Dans les réalisations, le levier est conformé de façon à réduire l'encombrement du dispositif dans la direction de convoyage, ce qui permet de disposer plusieurs dispositifs de transfert les uns à proximité des autres.

Dans le cas d'axes perpendiculaires à la direction de convoyage, tels que verticaux, une réalisation prévoit plusieurs leviers articulés, la longueur de la partie de chaque levier située sensiblement à hauteur de l'axe d'articulation correspondant, étant inférieure à la distance entre deux axes d'articulation adjacents. Cette disposition évite les risques d'interférence entre deux dispositifs de transfert proches.

Selon une réalisation, le dispositif comprend des moyens de détection de la position de l'extrémité de la bielle, alors dite 〈〈 rayonnante 〉〉, actionnés à chaque tour, à la fin de la course de retour de la bielle et reliés à un dispositif de commande du moteur.

Cela permet de commander précisément l'ensemble de motorisation de la bielle rayonnante, en particulier de définir la position d'arrêt précise du levier pendulaire, en fonction du déplacement de l'extrémité de la bielle.

Tandis que cela permet de déceler et d'indiquer le retrait du levier à proximité du convoyeur et d'autoriser ou non sa marche.

Un deuxième objet de l'invention concerne au moins un convoyeur linéaire comprenant un dispositif de transfert tel qu'évoqué, et défini dans les revendications.

Ce convoyeur fonctionne efficacement et présente des coûts de mise en service et d'exploitation relativement faibles.

L'invention sera mieux comprise à la lumière de la description qui suit de deux réalisations, donnée uniquement à titre d'exemple et faite en référence aux dessins annexés dans lesquels :
- la figure 1 est une vue en élévation, perpendiculairement à une direction de convoyage, d'un convoyeur équipé d'un dispositif de transfert selon l'invention dans une première position d'attente ;
- la figure 2 est une vue similaire à la figure 1 alors que le dispositif de transfert est dans une seconde position après transfert d'un objet ;
- la figure 3 est une vue d'élévation perpendiculaire à la direction de convoyage à plus grande échelle d'une partie du dispositif de transfert dans la position de la figure 1 ;
- la figure 4 est une vue similaire à la figure 3, le dispositif de transfert étant dans la position de la figure 2 ;
- la figure 5 est une coupe selon la ligne V-V de la figure 4 ;
- la figure 6 est une vue en plan de dessus d'un convoyeur équipé d'un dispositif de transfert selon une seconde réalisation de l'invention ; et
- la figure 7 est une vue en élévation latérale d'un convoyeur équipé de plusieurs dispositifs de transfert du type de celui de la figure 6.

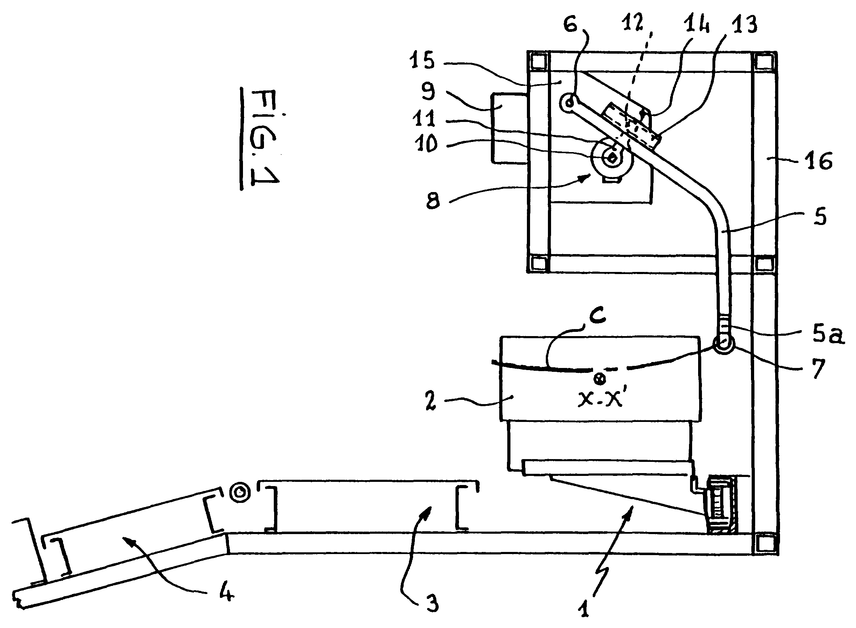

Sur la figure 1, un convoyeur 1 a pour fonction de déplacer des objets tridimentionnels, ici des colis 2 dans une direction de convoyage XX' perpendiculaire au plan de cette figure. A la place des colis 2, on pourrait déplacer des objets d'autre nature, avec ou sans emballage.

On comprend que l'objet 2 est représenté sur cette figure 1, avant son transfert.

Un bâti fixe 3 est ici prévu sur un côté du convoyeur 1 pour recevoir un colis 2' à transférer vers un emplacement 4 décrit plus loin.

Dans des réalisations, à la place du bâti fixe, est prévu pour la réception des objets provenant du convoyeur, une glissière de tri ou encore un autre convoyeur.

L'orientation de ces structures de réception 3, est selon les réalisations, horizontale (c'est-à-dire parallèle aux directions de transfert et de convoyage), inclinée ou analogues.

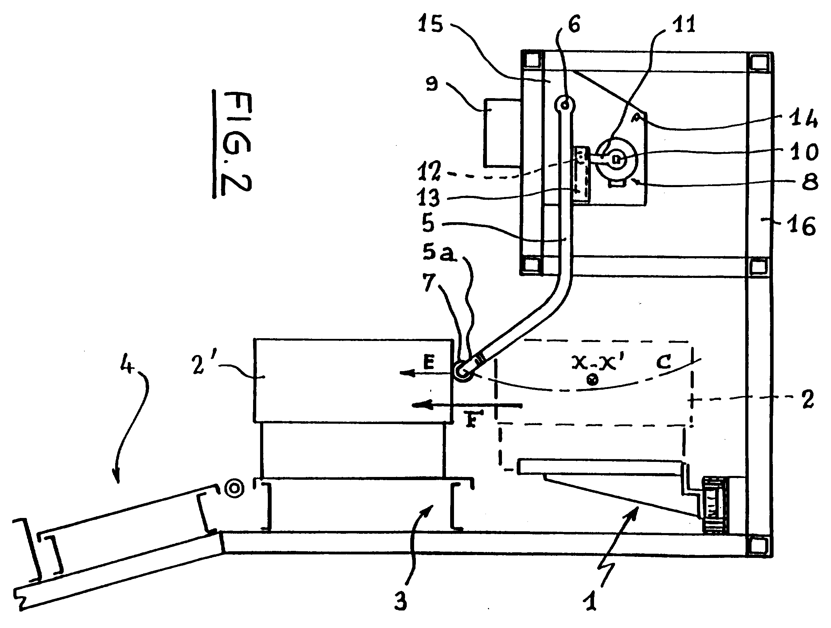

Un colis 2' est représenté à la figure 2 en cours de déplacement suivant la direction de la flèche F, du convoyeur 1 vers l'emplacement 4, via le bâti 3.

On comprend de ce qui précède que, lorsqu'un colis 2' est déjà présent sur le bâti 3, la poussée du colis 2 sur 2' évacue ce dernier sur l'emplacement 4.

Comme pour la structure de réception ou bâti 3, l'emplacement 4 est remplacé dans des réalisations, par une glissière de tri.

Dans une autre réalisation, l'emplacement 4 est un posage fixe.

Cet emplacement 4 fait partie, dans encore une autre réalisation, d'un convoyeur, permettant d'évacuer par exemple suivant la direction X-X' les colis au fur et à mesure de leur arrivée sur ce convoyeur.

Comme indiqué plus haut, le transfert sur ce convoyeur de réception 4 ou depuis le convoyeur d'arrivée 1 des objets 2, est selon les cas lorsque ce convoyeur 1 ou 4 respectivement, est en fonctionnement et donc mobile, ou à l'arrêt lors de ce transfert.

Pour faire passer un colis 2 du convoyeur 1 sur le bâti 3, c'est-à-dire dans la position 2' sur la figure 2, est prévu un levier 5, ici coudé, et articulé de façon pendulaire autour d'un axe 6 sensiblement parallèle à la direction XX'.

Ce levier est muni à son extrémité libre 5a, ici inférieure, d'un rouleau de contact 7 prévu pour exercer un effort E d'appui simple ou de poussée sur le colis 2 en cours de transfert.

D'autres types de pièce de contact sont utilisés dans d'autres réalisations, telles que des patins. Dans d'autres réalisations encore, la pièce de contact est un sabot articulé sur le levier, et maintenu vertical lors des mouvements de ce dernier, par un panthographe pendulaire.

Notons que l'effort E est sensiblement parallèle à la flèche F, et donc sensiblement perpendiculaire à la direction XX'.

Le levier 5 est entraîné autour de l'axe 6 par un ensemble 8 de motorisation, piloté par une unité de contrôle 9 et pourvu d'un arbre de sortie 10.

La liaison cinématique entre l'arbre de sortie 10 de l'ensemble 8 et le levier 5 est réalisée grâce à une bielle 11 solidaire de l'arbre 10 et pourvue d'un galet 12 prévu pour coulisser dans une glissière 13 fixée sur le levier 5. La glissière 13 fait partie du levier 5 dans une réalisation non illustrée.

On obtient ainsi une articulation du type bielle-manivelle.

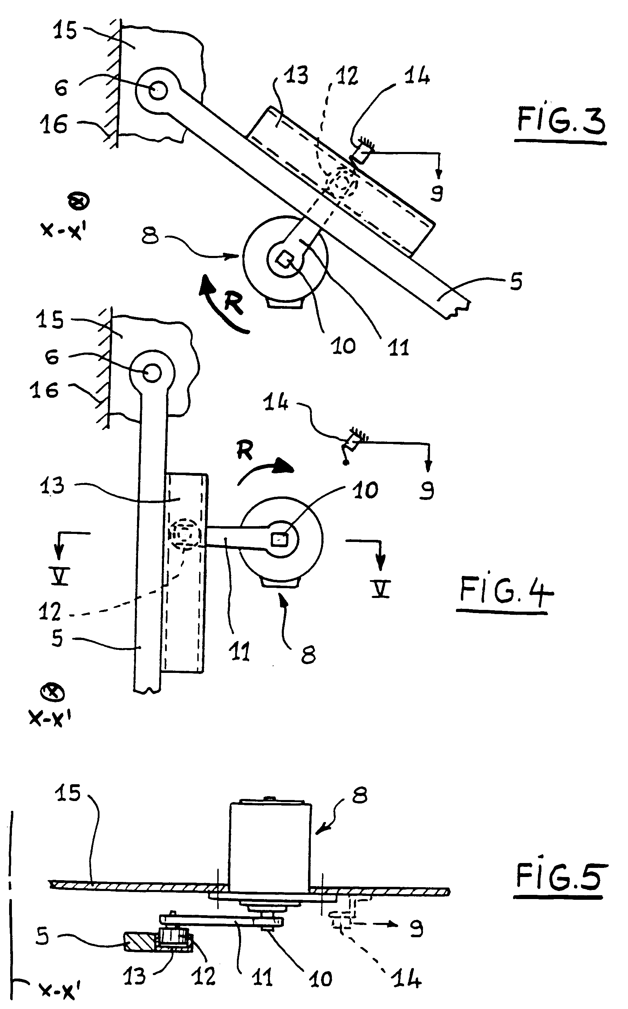

L'ensemble de motorisation 8 est prévu pour tourner dans un seul sens de rotation représenté par la flèche R aux figures 3 et 4.

La rotation de l'arbre 10 induit un mouvement de translation du galet 12 à l'intérieur de la glissière 13. Ce mouvement a pour effet de faire pivoter le levier 5 autour de l'axe 6. Ceci permet de déplacer l'extrémité 5a du levier 5 entre les positions des figures 1 et 3 et celle des figures 2 et 4 selon un arc de cercle C (figures 1 et 2) situé dans un plan ici vertical, c'est-à-dire sensiblement perpendiculaire à la direction XX' et donc dans le plan des figures 1 et 2 au-dessus du convoyeur 1.

On comprend que le passage de l'extrémité 5a de sa position de la figure 1 à sa position de la figure 2, permet de transférer le colis 2 du convoyeur 1 vers le bâti 3 grâce à l'effort E exercé par le rouleau 7 monté sur le lever 5.

On comprend également que l'articulation du type bielle-manivelle permet d'obtenir sans modifier le sens R de rotation de l'ensemble 8, une inversion du mouvement de l'extrémité 5a du lever 5 dans les deux positions représentées.

L'accélération et la décélération nécessaires à chaque fin de course de l'extrémité 5a sont ainsi obtenues alors que le moteur tourne dans un seul sens, ici avec une vitesse sensiblement constante.

En d'autres termes, un tour du moteur correspond à un mouvement de va-et-vient de l'extrémité 5a du lever 5, de la première position de la figure 1 à la deuxième position de la figure 1, en passant par la position de la figure 2.

Le mouvement du moteur de l'ensemble 8, qui est piloté grâce à l'unité 9, permet d'avoir deux points d'arrêt précis du lever 5 indépendamment des jeux fonctionnels.

Ainsi, une position précise du colis 2 après son transfert, avec une bonne répétitivité, est obtenue sans avoir à prévoir des détecteurs précis et coûteux, et cela avec une structure simple.

On comprend des figures 2, 3 et 4 notamment, que dans la zone intermédiaire de l'arc de cercle C, la vitesse du levier 5 est relativement importante, alors que cette vitesse en bout de course est uniformément diminuée pour devenir nulle.

Le dispositif de transfert permet donc de d'abord de débuter rapidement le transfert des colis 2 du convoyeur 1 vers le bâti 3.

Et ensuite, à l'approche de la position de destination souhaitée du colis, alors que le mouvement en fin de course est à vitesse réduite, d'éviter les chocs, notamment lors de l'entrée en contact de l'extrémité 5a et du colis 2 à transférer.

Une fois cette position atteinte, on obtient le 〈〈 relâchement〉〉 de ce colis à un emplacement précis sur le bâti 3.

Dans ce cas, le temps d'avance du levier pendulaire 5 (lors de la poussée de l'objet) et son retour sont proportionnels à l'angle parcouru par la bielle.

Dans la réalisation illustrée sur les figure 1 à 5, le temps de retour est environ deux fois inférieur -pour un ensemble de motorisation 8 tournant à vitesse sensiblement constante- que le temps d'avance. En effet, l'angle de retour est de sensiblement de 120°, et celui d'avance de 240° sensiblement.

Tandis que l'effort de poussée à l'avance est proportionnel au rayon d'action de la belle par rapport à son axe. Et l'arc C est disposé pour obtenir un effort important en cours de poussée, qui diminue progressivement pour devenir sensiblement nul, à l'approche du relâchement.

En conséquence, puisque le colis 2 glisse sur le bâti 3 et qu'en fin de course le levier 5 a une vitesse faible, ce colis 2 est immobilisé sous l'effet de son frottement sur le bâti 3 sans que son inertie ait tendance à l'entraîner suivant la flèche F, trop loin vers l'emplacement 4.

En outre, notons que l'image de la position de la belle est celle du levier pendulaire 5. Il n'y donc pas de contact électrique sur ce levier.

Par ailleurs, selon les objets ou colis 2 à transférer, par exemple en fonction de leur masse ou de leur frottement contre le bâti 3, les matériaux du bâti sont choisis pour procurer un placement précis et rapide.

Dans une réalisation destinée aux objets 2 lourds, pour diminuer l'effort F, le bâti 3 est remplacé par une plage de roulement dont le coefficient de roulement est léger.

Pour permettre à l'unité 9 d'arrêter le fonctionnement de l'ensemble de motorisation 8, est prévu sur les figures 3 à 5, un détecteur fixe de fin de course 14 actionné par la bielle 11, à chaque tour.

Il n'est pas nécessaire de prévoir d'autres détecteurs de fin de course, notamment définissant la position de l'objet ou colis, puisque l'inversion de mouvement de l'extrémité 5a dans la position des figures 2 et 4 a lieu sans action particulière de l'unité 9.

Le détecteur 14 est ici d'un type relativement peu précis, puisque la position rayonnante d'immobilisation de la bielle 11 correspond à une position inactive du levier 5, en fin de course de retour.

L'ensemble de motorisation 8 et l'axe 6 sont montés sur une platine ou pièce 15 qui supporte l'ensemble du dispositif de transfert, à l'exception de l'unité de contrôle 9 qui est ici disposée dans une armoire de contrôle à proximité du convoyeur.

Ainsi, les composants mécaniques du dispositif de transfert, c'est-à-dire les éléments 5 à 8, peuvent être montés de façon unitaire au-dessus du convoyeur 1 en fixant simplement la pièce 15 sur une structure de support 16.

On obtient de la sorte un assemblage modulaire de rechange, qui comprend les organes de transfert dont le levier 5 et son ensemble de motorisation 8.

Il suffit alors de raccorder logiquement le détecteur 14 à l'unité 9 et d'alimenter électriquement le moteur 8 à partir de l'unité 9.

Cela permet un entretien aisé, rapide et sans risque d'erreur du dispositif de transfert. Il en va de même pour son installation initiale.

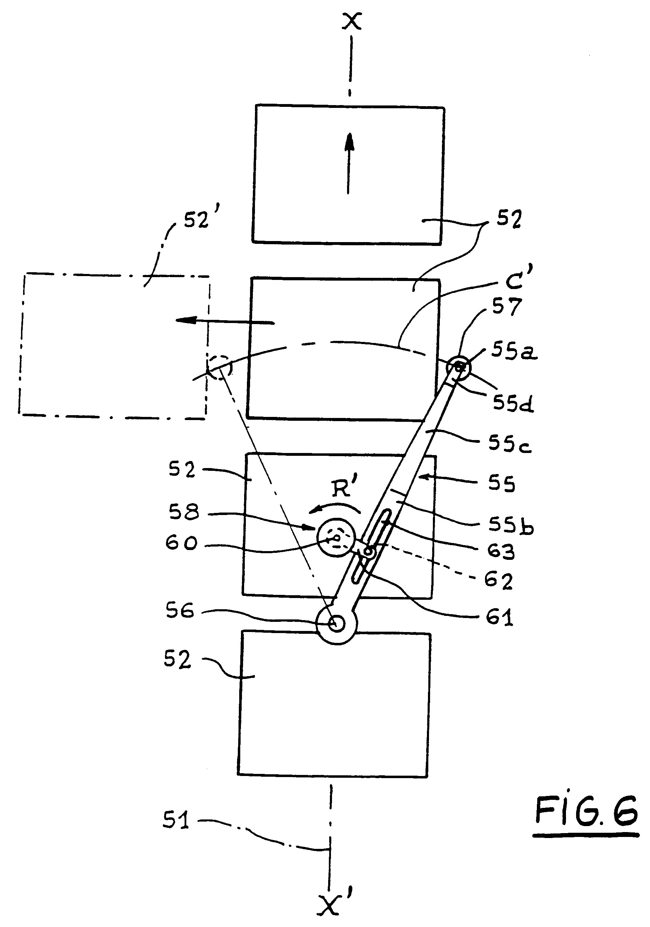

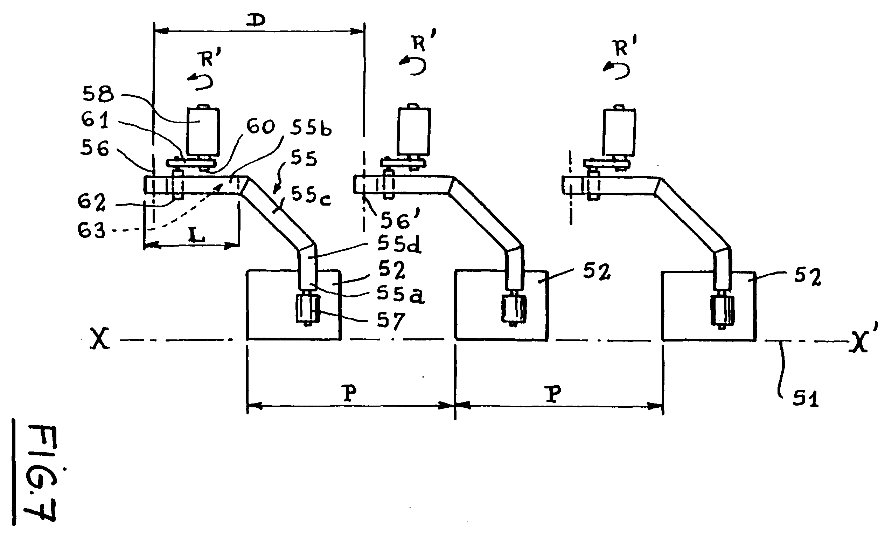

Dans la deuxième réalisation représentée aux figures 6 et 7, les éléments analogues à ceux du mode de réalisation des figures 1 à 5 portent des références identiques augmentées de 50.

Sur la figure 6, un convoyeur 51 est utilisé pour déplacer des colis 52 selon une direction XX'.

Un levier 55 est articulé autour d'un axe 56 sensiblement perpendiculaire à la direction XX' et motorisé par un ensemble 58 auquel il est relié par une bielle 61. L'extrémité de la bielle 61 porte un galet 62 prévu pour coulisser dans une glissière 63 ménagée dans le levier 55.

La glissière 63 pourrait également être rapportée sur le levier 55. Un rouleau de contact 57 est disposé à l'extrémité libre 55a du levier 55. Grâce à cet arrangement, l'extrémité libre 55a est mobile dans un mouvement de va-et-vient selon un arc de cercle C', alors que l'arbre de sortie 60 de l'ensemble 58 tourne dans un seul sens représenté par la flèche R'.

Il apparaît sur la figure 7 que le levier 55 est coudé et formé de trois sections 55b, 55c et 55d sensiblement rectilignes. Dans d'autres réalisations, le levier 55 prend une autre forme de coude ou cintrage continu.

La glissière 63 est ménagée dans la section globalement horizontale 55b du levier 55 située approximativement à la hauteur de l'axe 56.

La figure 7 montre un dispositif de transfert comprenant plusieurs leviers 5 articulés, avec lequel il est possible de supporter les différents leviers et leurs dispositifs d'entraînement associés avec une bonne compacité.

En particulier, la longueur L de la section 55b de chaque levier 55, située sensiblement à la hauteur des axes d'articulation 56, est inférieure à la distance D séparant deux axes d'articulation 56 et 56' adjacents.

On évite ainsi une interférence entre les différents leviers. Cette disposition permet d'espacer les leviers 55 avec une distance D qui est sensiblement égale au pas P des objets 2 sur le convoyeur 51.

Dans une réalisation, plusieurs leviers 5 ou 55 sont actionnés par un ensemble de motorisation 8 ou 58 commun, les bielles de commande de ces leviers étant montées sur un arbre commun entraîné par l'ensemble de motorisation commun, par l'intermédiaire d'accouplements individuels motorisés, tels qu'électromagnétiques ou analogues, de chaque levier 5 ou 55 de transfert agencés pour assurer une commande séparée, en même temps ou distincte, d'au moins un de ces leviers ou de tous ces derniers.

Bien que cela ne soit pas représenté, les dispositifs représentés aux figures 6 et 7 comprennent des moyens de détection de la position de l'extrémité de la bielle, analogues à ceux du premier mode de réalisation et une unité 9 de contrôle.

L'invention a été représentée alors que les colis sont déplacés sensiblement perpendiculairement à la direction de convoyage. Elle est cependant applicable lorsque les colis sont déplacés dans d'autres directions, par exemple à 30 ou à 45°, par rapport à la direction de convoyage.

L'invention a été présentée avec des axes 6 et 56 situés au-dessus du convoyeur.

Des dispositifs de transfert ont leurs axes situés en-dessous des convoyeurs. L'invention est également applicable en combinant les différents dispositifs décrits, imbriqués dessus et dessous ou non, le long d'un convoyeur.

Contrairement aux agencements connus et destinés à faire pivoter des colis avec un angle de 90° sur eux-mêmes en les évacuant d'un convoyeur sur un autre, des réalisations de l'invention comportent un levier pendulaire vertical, dont l'axe horizontal est placé au-dessus ou au-dessous du convoyeur d'acheminement des colis, ce qui évacue le colis de façon orthogonale.

Dans la réalisation où le levier transfert est horizontal, son axe d'articulation verticale est placé par exemple au-dessus du convoyeur, limitant sensiblement la corde du déplacement angulaire de l'extrémité de ce lever, ce qui autorise, là aussi, un transfert sans rotation du colis pour le peu qu'il soit placé entre deux guides.

## Revendications

1. Dispositif de transfert destiné à équiper un convoyeur linéaire (1, 51), apte à exercer sélectivement sur des objets (2, 52) un effort (E) de poussée selon une trajectoire sécante à une direction de convoyage (XX') du convoyeur, un levier (5, 55) étant commandé par une bielle (11, 61) entraînée en rotation par un ensemble de motorisation (8, 58), via une liaison coulissante entre la bielle et le levier ;
caractérisé en ce que le levier (5) est articulé autour d'un axe (6) situé dans un plan comprenant sensiblement la direction de convoyage (XX') et par exemple sensiblement parallèle à cette direction (XX'), au droit du convoyeur de destination (1, 51), cet axe étant situé au-dessus ou en-dessous du convoyeur ; tandis qu'une extrémité libre (5a) du levier a une trajectoire selon un arc de cercle (C) dans un plan, par exemple vertical et sensiblement perpendiculaire à la direction de convoyage (XX'), situé au-dessus ou en-dessous du convoyeur (1), afin de permettre une évacuation sans pivotement des objets (2, 52) hors du convoyeur (1).

2. Dispositif de transfert destiné à équiper un convoyeur linéaire (1, 51), apte à exercer sélectivement sur des objets (2, 52) un effort (E) de poussée selon une trajectoire sécante à une direction de convoyage (XX') du convoyeur, un levier pendulaire (5, 55) étant commandé par une bielle (11, 61) entraînée en rotation par une ensemble de motorisation (8, 58), via une liaison coulissante entre la bielle et le levier, et étant (55) articulé autour d'un axe (56) sensiblement perpendiculaire à la direction de convoyage (XX), par exemple horizontal ;
caractérisé en ce que cet axe (56) est situé sensiblement au droit, et au-dessus ou en-dessous du convoyeur, tandis qu'une extrémité libre (55a) de ce levier (55) a une trajectoire selon un arc de cercle (C'), dans un plan par exemple horizontal, sensiblement parallèle à la direction du convoyage (XX') et situé au-dessus ou en-dessous du convoyeur (51), afin d'évacuer sans pivotement les objets hors du convoyeur.

3. Dispositif de transfert selon la revendication 2, caractérisé en ce que le levier (55) est conformé de façon à réduire sensiblement l'encombrement du dispositif dans la direction de convoyage (XX') et/ou perpendiculairement à cette direction.

4. Dispositif de transfert selon la revendication 2 ou 3, caractérisé en ce qu'il comprend plusieurs leviers (55) articulés, la longueur (L) de la partie (55b) de chaque lever (55) située à hauteur de l'axe d'articulation (56) correspondant, étant inférieure à la distance (D) entre deux axes d'articulation adjacents.

5. Dispositif de transfert selon l'une des revendications 1 à 4, caractérisé en ce que l'ensemble de motorisation (8, 58) tourne dans un seul sens (R, R') éventuellement à vitesse sensiblement constante, la rotation de cet ensemble entraînant un mouvement de va-et-vient de l'extrémité libre (5a, 55a) du levier (5, 55) pendulaire.

6. Dispositif de transfert selon l'une des revendications 1 à 5, caractérisé en ce qu'il comprend plusieurs leviers (5) actionnés par un ensemble de motorisation (8) commun, les bielles de commande de ces leviers étant montées sur un arbre commun entraîné par l'ensemble de motorisation (8) commun, par exemple par l'intermédiaire d'accouplements individuels motorisés, tels qu'électromagnétiques ou analogues, de chaque levier (5) de transfert agencés pour assurer une commande séparée, en même temps ou distincte, d'au moins un des leviers (5) ou de tous ces derniers.

7. Dispositif de transfert selon l'une des revendications 1 à 6, caractérisé en ce que le levier (5, 55) comprend une zone allongée (13, 63) de réception de l'extrémité (12, 62) de la bielle (11, 61).

8. Dispositif de transfert selon l'une des revendications 1 à 7, caractérisé en ce qu'il comprend des moyens (14) de détection de la position d'une extrémité (12) de la bielle (11), ces moyens de détection étant actionnés à chaque tour à la fin de la course de retour de la belle (11) et étant reliés à un dispositif de commande (9) de l'ensemble de motorisation (8).

9. Dispositif de transfert selon l'une des revendications 1 à 8, caractérisé en ce que l'ensemble de motorisation (8, 58 est monté au-dessus dudit convoyeur (2, 52).

10. Convoyeur linéaire (1, 51) comprenant un dispositif de transfert selon l'une des revendications 1 à 9, caractérisé en ce qu'au moins un lever (5, 55) et/ou ensemble de motorisation (8, 58) est monté sur une structure de support (16) sensiblement au droit du convoyeur (1, 51) de sorte que le lever (5, 55) ne saillent de ce convoyeur (1, 51) qu'en position de transfert de l'objet (2, 2').
